# EUROPEAN PATENT SPECIFICATION

(11) **EP 2 447 316 B1**
(45) Date of publication and mention of the grant of the patent: **23.10.2013**
(21) Application number: 11186307.2
(22) Date of filing: 24.10.2011
(51) Int. Cl.: B60C 1/00, B60C 5/14, C08L 7/00, C08L 9/02

(54) **Tire with tie layer and method of making same.**
Reifen mit Haftvermittlerschicht und Verfahren zu dessen Herstellung
Pneu avec couche de pneu et son procédé de fabrication

(30) Priority: 28.10.2010 US 913996
(43) Date of publication of application: 02.05.2012
(73) Proprietor: The Goodyear Tire & Rubber Company, Akron, OH 44316-0001 (US)
(72) Inventor: Incavo, Joseph Alan, Hudson, OH 44236 (US)
(74) Representative: Kutsch, Bernd

(56) References cited:
- EP-A1- 2 123 479
- WO-A1-2007/050061
- WO-A1-2008/051253
- WO-A2-2007/070728
- US-A1- 2008 314 491
- US-A1- 2008 314 492
- US-A1- 2010 181 003

## Description

### Technical Field

The present invention is directed to a tire, which includes a tie layer and a barrier layer adhered thereto, and a method of making the same.

### Background

Dynamically vulcanized alloy ("DVA") film has been touted as an improved replacement for halobutyl barrier layers, e.g., halobutyl innerliners, in tires at least in part because the films are thinner and lighter than conventional halobutyl innerliners. Yet, in order to build and cure a tire using a DVA barrier layer, attachment to the carcass needs to be addressed because, unlike conventional halobutyl barrier layers, DVA is a non-stick material with no inherent tack. To overcome these drawbacks, an adhesive material can be applied directly onto the DVA film to improve its tack and cured adhesion. Another option for overcoming the non-stick nature of DVA barrier layers is to provide a tie layer, which is a thin layer of a specified rubber formulation, between the DVA film and a tire layer, e.g., a ply layer of the carcass, to afford enough building tack and cured adhesion for the DVA film to desirably adhere to the tire layer.

Unfortunately, various drawbacks exist with current tie layer formulations. One such problem with conventional tie layer formulations is an undersirably low level of tack, which interferes with processing of the tie layer itself and can make tire building impossible. Another problem is the use of epoxidized natural rubber in tie layers, which is an expensive and scarce specialty rubber.

Accordingly, there is a need for a pneumatic tire having a tie layer that adheres a DVA film, which is used as barrier layer, to a tire layer, e.g., a ply layer, and a method of making the same, which overcomes the aforementioned drawbacks.

### Summary

The present invention is directed to a tire having a tie layer that adheres a DVA film in accordance with claim 1, which may be used as a barrier layer, to a tire layer, e.g., a ply layer, and a method in accordance with claim 11. The invention also relates to a tie layer in accordance with claim 8.

Dependent claims refer to preferred embodiments of the invention.

In one embodiment, a tie layer, which is provided preferably for use in a pneumatic tire to adhere a DVA barrier layer to a tire layer, e.g., a ply layer, includes a rubber formulation having 100 parts of a mixture of rubbers chosen from 10-50 parts nitrile rubber, 20-70 parts natural rubber, and 10-30 parts synthetic polyisoprene rubber, wherein the mixture is the total amount of rubber for the rubber formulation. The rubber formulation further includes at least one reinforcing filler, at least one tackifier, and optionally at least one processing oil.

In another embodiment, a pneumatic tire is provided that includes a cured outer tread and a barrier layer disposed inwardly of the outer tread. The barrier layer includes a dynamically vulcanized alloy, which includes a resin as a continuous phase and at least a partially vulcanized rubber as a dispersed phase. A tire layer, e.g., a ply layer, is situated between the barrier layer and the tread and includes a rubber formulation having a diene rubber. A tie layer is situated between and adjacent to the barrier layer and the tire layer. The tie layer includes a rubber formulation, which includes 100 parts of a mixture of rubbers chosen from 10-50 parts nitrile rubber, 20-70 parts natural rubber, and 10-30 parts synthetic polyisoprene rubber, wherein the mixture is the total amount of rubber for the rubber formulation. The rubber formulation further includes at least one reinforcing filler, at least one tackifier, and optionally at least one processing oil. The tie layer is adhered directly to the tire layer and to the barrier layer without the need, for example, for the barrier layer to have an adhesive material applied to a confronting surface.

In another embodiment, a method of preparing a pneumatic tire is provided that includes positioning a barrier layer including a dynamically vulcanized alloy on a tire-building apparatus. The dynamically vulcanized alloy has a resin as a continuous phase and at least partially vulcanized rubber as a dispersed phase. The method further includes positioning a tie layer directly on the barrier layer. The tie layer includes a rubber formulation having 100 parts of a mixture of rubbers chosen from 10-50 parts nitrile rubber, 20-70 parts natural rubber, and 10-30 parts synthetic polyisoprene rubber, wherein the mixture is the total amount of rubber for the rubber formulation. The rubber formulation further includes at least one reinforcing filler, at least one tackifier, and optionally at least one processing oil. A tire layer, e.g., a ply layer, which includes a rubber formulation having a diene rubber, is positioned directly on the tie layer. Then, a tread is disposed outwardly of the tire layer to define an uncured tire assembly.

### Brief Description of the Drawings

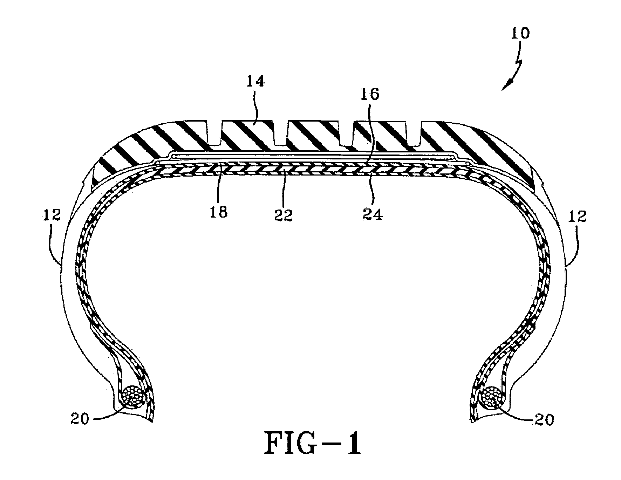

Fig. 1 is a cross-sectional view of a pneumatic tire with tie layer and DVA barrier layer in accordance with an embodiment of the present invention.

### Detailed Description

Fig. 1 shows a pneumatic tire 10 that includes sidewalls 12, an outer circumferential rubber tread 14, a supporting carcass 16, which includes a ply layer 18 and inextensible beads 20, a tie layer 22, and an innermost barrier layer 24. The individual sidewalls 12 extend radially inward from the axial outer edges of the tread 14 to join the respective inextensible beads 18. The supporting carcass 16, which includes ply layer 18, acts as a supporting structure for the tread portion 14 and sidewalls 12. The tie layer 22, so named because it ties two layers together, is situated directly between the ply layer 18 and the barrier layer 24, which is the innermost layer of the tire 10. The outer circumferential tread 14 is adapted to be ground contacting when the tire 10 is in use. And the barrier layer 24 is designed to inhibit the passage of air or oxygen therethrough so as to maintain tire pressure over extended periods of time. The barrier layer 24, when positioned as the innermost layer of the tire 10, is commonly referred to as an innerliner.

The barrier layer 24 of the tire 10 includes a dynamically vulcanized alloy ("DVA"), which includes at least one resin as a continuous phase and at least one partially vulcanized rubber as a dispersed phase. The DVA can be prepared by generally blending together the resin and rubber, with curatives and fillers, utilizing technology known as dynamic vulcanization. The term "dynamic vulcanization" denotes a vulcanization process in which the resin and the rubber are mixed under conditions of high shear and elevated temperature in the presence of a curing agent. The dynamic vulcanization is effected by mixing the ingredients at a temperature which is at or above the curing temperature of the rubber using equipment such as roll mills, Banbury mixers, continuous mixers, kneaders, mixing extruders (such as twin screw extruders), or the like. As a result, the rubber is simultaneously crosslinked and dispersed as fine particles, for example, in the form of a microgel, within the engineering resin, which forms a continuous matrix. One characteristic of the dynamically cured composition is that, notwithstanding the fact that the rubber is cured (or at least partially cured), the composition can be processed and reprocessed by conventional thermoplastic processing techniques such as extrusion, injection molding, compression molding, etc.

The resin (also called an "engineering thermoplastic resin," a "thermoplastic resin," or a "thermoplastic engineering resin") can include any thermoplastic polymer, copolymer or mixture thereof including, but not limited to, one or more of the following: a) polyamide resins, such as nylon 6 (N6), nylon 66 (N66), nylon 46 (N46), nylon 11 (N11), nylon 12 (N12), nylon 610 (N61 0), nylon 612 (N612), nylon 6/66 copolymer (N6/66), nylon MXD6 (MXD6), nylon 6T (N6T), nylon 6/6T copolymer, nylon 66/PP copolymer, or nylon 66/PPS copolymer; b) polyester resins, such as polybutylene terephthalate (PBT), polyethylene terephthalate (PET), polyethylene isophthalate (PEI), PET/PEI copolymer, polyacrylate (PAR), polybutylene naphthalate (PBN), liquid crystal polyester, polyoxalkylene diimide diacid/polybutyrate terephthalate copolymer and other aromatic polyesters; c) polynitrile resins, such as polyacrylonitrile (PAN), polymethacrylonitrile, acrylonitrile-styrene copolymers (AS), methacrylonitrile-styrene copolymers, or methacrylonitrile-styrene-butadiene copolymers; d) polymethacrylate resin, such as polymethyl methacrylate, or polyethylacrylate; e) polyvinyl resins, such as vinyl acetate (EVA), polyvinyl alcohol (PVA), vinyl alchohol/ethylene copolymer (EVOA), polyvinylidene chloride (PVDC), polyvinyl chloride (PVC), polyvinyl/polyvinylidene copolymer, or polyvinylidene chloride/methacrylate copolymer; f) cellulose resins, such as cellulose acetate, or cellulose acetate butyrate; g) fluorine resins, such as polyvinylidene fluoride (PVDF), polyvinyl fluoride (PVF), polychlorofluoroethylene (PCTFE), or tetrafluoroethylene/ ethylene copolymer (ETFE); h) polyimide resins, such as aromatic polyimides; i) polysulfones; j) polyacetals; k) polyactones; I) polyphenylene oxide and polyphenylene sulfide; m) styrene-maleic anhydride; n) aromatic polyketones; and o) mixtures of any and all of a) through n) inclusive as well as mixtures of any of the illustrative or exemplified engineering resins within each of a) through n) inclusive.

In one embodiment, the engineering resin includes polyamide resins and mixtures thereof, such as Nylon 6, Nylon 66, Nylon 6 66 copolymer, Nylon 11, and Nylon 12, and their blends. In another embodiment, the engineering resin excludes polymers of olefins, such as polyethylene and polypropylene.

The rubber component of the DVA can include diene rubbers and hydrogenates thereof, halogen containing rubbers, such as a halogenated isobutylene containing copolymers (e.g., brominated isobutylene p-methylstyrene copolymer), silicone rubbers, sulfur-containing rubbers, fluoro rubbers, hydrin rubbers, acryl rubbers, ionomers, thermoplastic elastomers, or combinations and blends thereof.

In one embodiment, the rubber component of the DVA is a halogen containing rubber. The halogen containing rubber, or halogenated rubber, can include a rubber having at least 0.1 mole % halogen (e.g., bromine, chlorine or iodine). Suitable halogenated rubbers include halogenated isobutylene containing rubbers (also referred to as halogenated isobutylene-based homopolymers or copolymers). These rubbers can be described as random copolymers of a C₄ to C₇ isomonoolefin derived unit, such as isobutylene derived unit, and at least one other polymerizable unit. In one example, the halogenated isobutylene-containing rubber is a butyl-type rubber or branched butyl-type rubber, such as as brominated versions. Useful unsaturated butyl rubbers such as homopolymers and copolymers of olefins or isoolefins and other types of rubbers suitable for the disclosure are well known and are described in RUBBER TECHNOLOGY 209-581 (Maurice Morton ed., Chapman & Hall 1995), THE VANDERBILT RUBBER HANDBOOK 105-122 (Robert F. Ohm ed., R.T. Vanderbilt Co., Inc. 1990), and Edward Kresge and H. C. Wang in 8 KIRK-OTHMER ENCYCLOPEDIA OF CHEMICAL TECHNOLOGY 934-955 (John Wiley & Sons, Inc. 4th ed. 1993). In one example, the halogenated containing rubber is a halogenated isobutylene-p-methylstyrene-isoprene copolymer or a halogenated poly(isobutylene-co-p-methylstyrene) polymer, which is a brominated polymer that generally contains from 0.1 to 5 wt % of bromomethyl groups.

In one embodiment, both the rubber component and engineering resin are present in an amount of at least 10% by weight, based on the total weight of the rubber formulation; and the total amount of the rubber component and engineering resin is not less than 30% by weight, based on the total weight of the rubber formulation.

As earlier indicated, the DVA can also include one or more filler components, which can include calcium carbonate, clay, mica, silica and silicates, talc, titanium dioxide, starch and other organic fillers such as wood flour, and carbon black. In one example, the filler is present from 20% to 50% by weight of the total DVA composition.

Additional additives known in the art may also be provided in the DVA to provide a desired compound having desired physical properties. Such known and commonly used additive materials are activators, retarders and accelerators, rubber processing oils, resins including tackifying resins, plasticizers, fatty acids, zinc oxide, waxes, antidegradant, antiozonants, and peptizing agents. As known to those having ordinary skill in the art, depending on the intended use of the DVA, the additives are selected and used in conventional amounts.

Suitable DVAs as well as methods for making DVAs in accordance with embodiments of the present invention are disclosed in US-A- 2008/0314491; US-A-2008/0314492; and US-A- 2009/015184.

Specifically with respect to the dynamic vulcanization process itself, the process involves substantially simultaneously mixing and vulcanizing, or crosslinking, at least the one vulcanizable rubber component in a composition that further includes at least the one resin, which is not vulcanizable, using a vulcanizing or curing agent(s) for the vulcanizable component. Suitable curing agents or curatives for the dynamic vulcanization process include, for example, ZnO, CaO, MgO, Al₂O₃, CrO₃, FeO, Fe₂O₃, and NiO, which can be used in conjunction with a corresponding metal stearate complex (e.g., the stearate salts of Zn, Ca, Mg, and Al), or with stearic acid, and either a sulfur compound or an alkylperoxide compound. Accelerators may be optionally added. Peroxide curatives are to be avoided when the engineering resin(s) chosen are such that peroxide would cause these resins themselves to crosslink, thereby resulting in an excessively cured, non-thermoplastic composition.

The dynamic vulcanization process is conducted at conditions to at least partially vulcanize the rubber component. To accomplish this, the resin, the rubber component and other optional polymers, as well as the cure system, can be mixed together at a temperature sufficient to soften the resin. The mixing process can be continued until the desired level of vulcanization or crosslinking is completed. In one embodiment, the rubber component can be dynamically vulcanized in the presence of a portion or all of the resin. Similarly, it is not necessary to add all of the fillers and oil, when used, prior to the dynamic vulcanization stage. Certain ingredients, such as stabilizers and process aids can function more effectively if they are added after curing. Heating and masticating at vulcanization temperatures are generally adequate to complete vulcanization in 0.5 to 10 minutes. The vulcanization time can be reduced by elevating the temperature of vulcanization. A suitable range of vulcanization temperatures is typically from about the melting point of the thermoplastic resin to about 300°C, for example.

The resulting DVA is ready to be used as the barrier layer 24. To that end, the barrier layer 24 or "stock" can be prepared by blow molding the DVA material into a sheet or film material having a thickness of 0.05 mm to 0.3 mm and cutting the sheet material into strips of appropriate width and length for application in a particular size or type tire. In another example, the DVA material can have a thickness of 0.1 mm to 0.2 mm. The barrier layer 24 may also be provided as a tubular layer. One suitable type of DVA film for use as the barrier layer 24 is Exxcore^{™}, which is available from ExxonMobil of Houston, Texas.

The tie layer 22, which adheres the barrier layer 24 to the ply layer 20 of the tire 10, includes a rubber formulation that has 100 parts of a mixture of rubbers chosen from 10-50 parts nitrile rubber, 20-70 parts natural rubber, and 10-30 parts synthetic polyisoprene rubber, wherein the mixture is the total amount of rubber for the rubber formulation. Such rubber formulation further includes at least one reinforcing filler, at least one tackifier, and optionally at least one processing oil.

With respect to the mixture of rubbers, the acrylonitrile (ACN) content of the nitrile rubber can range from 10% to 45%. In another example, the nitrile rubber can include from 15% to 30% acrylonitrile (ACN). And in another example, the nitrile ruber can include from 18% to 28% acrylonitrile. If the percent nitrile rubber content is too high, the glass transition temperature (Tg) undesirably increases, which causes the rubber formulation to become brittle and crack at low temperatures. Suitable types of nitrile rubber for use in the tie layer 22 are Perbunan^{®} 1846 F (18% ACN; Mooney viscosity (ML (1+4) 100°C) 45) or Perbunan^{®} 2845 F (18% ACN; Mooney viscosity (ML (1 +4) 100°C) 45), which are commercially available from Lanxess of Pittsburgh, Pennsylvania.

The reinforcing filler can include calcium carbonate, clay, mica, silica and silicates, talc, titanium dioxide, starch and other organic fillers such as wood flour, carbon black, and combinations thereof. In one example, the reinforcing filler is carbon black or modified carbon black. Suitable grades of carbon black include N110 to N990, as described in RUBBER TECHNOLOGY 59-85 (1995). In one example, the grade is N660 carbon black.

The reinforcing filler can be present in the rubber formulation in an amount from 10 phr to 150 phr. In another example, the filler is present in an amount from 30 phr to 100 phr. In yet another example, the filler is present in an amount from 40 phr to 70 phr.

The tackifier can include rosins or rosin derivatives, such as gum rosin, wood rosin, and tall oil rosin, and hydrogenated and disproportionated forms thereof, as well as various derivatives such as acetylene-phenolic compounds, and combinations thereof. Specific examples include condensation products of alkyl phenol, e.g., butyl phenol, and acetylene, such as alkylphenol acetylene resin tackifier, which is commercially available as Koresin from BASF Ludwigshafen, Germany, and water white gum rosin, which is commercially available from Eastman Chemical of Hattiesburg, Massachusetts. In one example, the tackifier includes a mixture of an alkylphenol acetylene resin tackifier and water white gum rosin.

The tackifier can be present in the rubber formulation in an amount from 1 phr to 20 phr. In another example, the tackifier is present in an amount from 2 phr to 18 phr. In another example, the tackifier is present in an amount from 5 phr to 15 phr.

The optional processing oil can include aliphatic acid esters or hydrocarbon plasticizer oils, such as paraffinic and/or naphthenic petroleum oils or polybutene oils. In one example, the processing oil is a naphthenic/paraffinic medium oil. The naphthenic content can range from 39 weight percent to 54 weight percent and the paraffinic content can range from 36 weight percent to 48 weight percent. The processing oil can be present in the rubber formulation in an amount from 0 phr to 15 phr. In another example, the processing oil is present in an amount from 1 phr to 10 phr.

Additional additives known in the art may also be provided in the rubber formulation of the tie layer 22 to provide a desired compound having desired physical properties. Such known and commonly used additive materials are activators, retarders and accelerators, plasticizers, fatty acids, zinc oxide, waxes, antidegradant, antiozonants, and peptizing agents. The rubber formulation for the tie layer 22 also includes curatives or a cure system so that the composition is vulcanizable and can be prepared by standard rubber compounding methods. As known to those having ordinary skill in the art, depending on the intended use of the tie layer, the additives and curatives are selected and used in conventional amounts.

The tire carcass 16 may be any conventional type tire carcass 16 for use in pneumatic tires 10. Generally, the tire carcass 16 includes one or more layers of plies 18 and/or cords to act as a supporting structure for the tread portion 14 and sidewalls 12. In Fig. 1, the carcass 16 includes at least one ply layer 18 having a rubber formulation including a diene rubber and is situated adjacent the tie layer 22.

The diene rubber generally can include natural and/or synthetic rubber(s). In one example, the diene rubber is a high diene rubber and includes at least 50 mole % of a C₄ to C₁₂ diene monomer and, in another example, at least 60 mole % to 100 mole %. Useful diene monomer rubbers include homopolymers and copolymers of olefins or isoolefins and multiolefins, or homopolymers of multiolefins, which are well known and described in RUBBER TECHNOLOGY, 179-374 (Maurice Morton ed., Chapman & Hall 1995), and THE VANDERBILT RUBBER HANDBOOK 22-80 (Robert F. Ohm ed., R.T. Vanderbilt Co., Inc. 1990). Suitable examples of diene monomer rubbers include polyisoprene, polybutadiene rubber, styrene-butadiene rubber, natural rubber, chloroprene rubber, acrylonitrile-butadiene rubber, and the like, which may be used alone or in combination and mixtures. In another example, the diene rubber can include styrenic block copolymers, such as those having styrene contents of 5 wt. % to 95 wt. %. Suitable styrenic block copolymers (SBC's) include those that generally comprise a thermoplastic block portion A and an elastomeric block portion B.

The rubber formulation for the ply layer 18 can also include reinforcing filler(s), such as calcium carbonate, clay, mica, silica and silicates, talc, titanium dioxide, starch and other organic fillers such as wood flour, carbon black, and combinations thereof. In one example, the reinforcing filler is carbon black or modified carbon black. Additional additives known in the art may also be provided in the rubber formulation of the ply layer 18 to provide a desired compound having desired physical properties. Such known and commonly used additive materials are activators, retarders and accelerators, rubber processing oils, resins including tackifying resins, plasticizers, fatty acids, zinc oxide, waxes, antidegradant, antiozonants, and peptizing agents.

The rubber formulation for the ply layer 18 also includes curatives or a cure system so that the composition is vulcanizable and can be prepared by standard rubber compounding methods. As known to those having ordinary skill in the art, depending on the intended use of the ply layer 18, the additives and curatives are selected and used in conventional amounts.

The mixing of all of the components of the rubber formulations for the tie layer 22 and ply layer 18 can be accomplished by methods known to those having ordinary skill in the art. For example, the ingredients can be mixed in at least two stages, namely, at least one non-productive stage followed by a productive mix stage. The final curatives are typically mixed in the final stage, which is conventionally called the "productive" mix stage in which the mixing typically occurs at a temperature, or ultimate temperature, lower than the vulcanization temperature of the elastomer. The tie layer 22 and ply layer 18 may be provided as a sheet or film that is formed, e.g., by the use of extrusion or calendering processes. In one example, the tie layer 22 can have a thickness of 0.015 inches to 0.065 inches. In another example, the tie layer 22 can have a thickness of 0.020 inches to 0.030 inches (1 inch = 2.54 cm).

The remainder of the tire components, e.g., the tire tread 14, sidewalls 12, and reinforcing beads 20, also generally may be selected from those conventionally known in the art. Like the tie layer 22 and ply layer 18, the tire tread 14, sidewalls 12, and beads 20 and their methods of preparation are well known to those having skill in such art.

Using the layers described above, the pneumatic tire 10 can be built on a tire forming drum (not shown) using standard tire building techniques and without the use of complicated, expensive tire building equipment. In particular, the pneumatic tire 10, as shown in Fig. 1, may be prepared by first situating or positioning the innermost barrier layer 24 on the tire drum, with the remainder of the uncured tire being subsequently built thereon. Next, the tie layer 22 is positioned directly on the innerliner 24. The ply layer 18 is then positioned directly on the tie layer 22, which is followed by the rest of the tire carcass 16. The tie layer 22 includes desirable uncured tack, or tackiness, to initially adhere the barrier layer 24 thereto, without the need, for example, of an adhesive material on the confronting surface of the barrier layer 24. Finally, the rubber tire tread 14 is positioned on the tire carcass 16 thereby defining an unvulcanized tire assembly. In another example, the tie layer 22 and barrier layer 24 can be co-calendared together prior to building and served to the tire forming drum as a single laminated component.

After the uncured tire assembly has been built on the drum, it can be removed and placed in a heated mold. The mold contains an inflatable tire shaping bladder that is situated within the inner circumference of the uncured tire. After the mold is closed the bladder is inflated and it shapes the tire 10 by forcing it against the inner surfaces of the closed mold during the early stages of the curing process. The heat within the bladder and mold raises the temperature of the tire 10 to vulcanization temperatures.

Generally, the tire 10 can be cured over a wide temperature range. Vulcanization temperatures can be from 100°C to 200 °C. For example, passenger or truck tires might be cured at a temperature ranging from 130°C to 180°C. The tire 10 may also be utilized as an aircraft, truck, farm, or off-the-road tire. Cure time may vary from about one minute to several hours depending on the mass of the tire. Cure time and temperature depend on many variables well known in the art, including the composition of the tire components, including the cure systems in each of the layers, the overall tire size and thickness, etc. Vulcanization of the assembled tire results in complete or substantially complete vulcanization or crosslinking of all elements or layers of the tire assembly, i.e., the barrier layer 24, the tie layer 22, the carcass 16 and the outer tread 14 and sidewall layers 12. In addition to developing the desired strength characteristics of each layer and the overall structure, vulcanization enhances adhesion between these elements, resulting in a cured, unitary tire 10 from what were separate, multiple layers.

As discussed above, the barrier layer 24, which includes a dynamically vulcanized alloy having at least one engineering resin and at least one partially vulcanized rubber, exhibits desirably low permeability properties. The tie layer 22 can generate desirably high vulcanized adhesion to the surface of the barrier layer 24 in which it is in contact, which can also allow for the use of a desirably thin tie layer 22. And the resulting overall structure allows for a tire construction having reduced weight.

Although shown as the innermost layer in Fig. 1, it should be understood that the barrier layer 24 can be situated in intermediate positions throughout the tire 10. In one example, the tie layer 22 can be situated adjacent an inner surface of the barrier layer 24 so as to tie a tire layer thereto, such as another barrier layer or ply layer 18. In another example, an inner and outer surface of the barrier layer 24 can be situated adjacent tie layers 22 to adhere desired tire layers thereto. In one example, one of those tire layers can include, for example, another barrier layer, which can be the same or different than barrier layer 24.

An example of a rubber formulation for use in the tie layer in accordance with the detailed description is disclosed below.

**TABLE I: Rubber Formulation for Tie Layer**

| Component | Stage | Amount (phr) |
|---|---|---|
| Synthetic polyisoprene ¹ | Non-productive 1 (NP1) | 15 |
| Natural rubber² | NP1 | 50 |
| Nitrile rubber³ | NP1 | 35 |
| N660 Carbon Black | NP1 | 54 |
| Naphthenic/paraffinic medium processing oil | NP1 | 6 |
| Water white gum rosin | NP1 | 5 |
| Alkylphenol-acetylene resin tackifier | NP1 | 3 |
| Stearic Acid | NP1 | 1 |
| Zinc Oxide | NP1 | 3 |
| NP1 | | 172.0 |
| N-tert-butyl-2-benzothiazole sulfenamide | Productive | 0.8 |
| Elemental Sulfur | Productive | 2 |
| Total | | 174.8 |

| | | |
|---|---|---|
| ¹ Natsyn^{™}, available from Goodyear Tire & Rubber Company of Akron, Ohio ² SMR-20 Block Rubber ³ Perbunan® 1845 F, available from Lanxess of Pittsburgh, Pennsylvania | | |

The tie layer rubber formulation of Table 1 was compared to other various tie layer rubber formulations, which are identified below as Comparative Examples A-D, by way of incorporating the same into multiple tire builds, which subsequently underwent vulcanization. A DVA innerliner was utilized in the tire builds for testing purposes. The DVA film for use as the innerliner was Exxcore^{™}, which was supplied by ExxonMobil of Houston, Texas. This DVA innerliner included nylon as the continuous phase and at least a partially vulcanized brominated isobutylene p-methylstyrene copolymer as the dispersed phase. The tie layer was sandwiched between the DVA innerliner and a ply layer, which included a high diene rubber, i.e., natural rubber. Various characteristics and properties of the tie layers, including uncured or green tack and cured adhesion of the tie layer to the DVA innerliner, were evaluated. The results/data are set out further below.

### Comparative Example A

This tie layer rubber formulation was identical to the rubber formulation of Table I with the following exceptions: Epoxidized natural rubber, a specialty rubber, replaced the nitrile rubber, and no synthetic polyisoprene rubber or processing oil was used.

### Comparative Example B

This tie layer rubber formulation was identical to the rubber formulation of Table I except that 65 phr of natural rubber and 35 phr of nitrile rubber were utilized as the rubber components in this rubber formulation.

### Comparative Example C

This tie layer rubber formulation was identical to Comparative Example B except that 1 phr (and not 3 phr) alkyphenol acetylene resin tackifier was utilized.

### Comparative Example D

This tie layer rubber formulation was identical to Comparative Example B except that 2 phr (and not 5 phr) white water gum rosin was utilized.

The rubber formulations identified above were prepared by standard rubber compounding methods as known to those having ordinary skill, and as discussed above. Each prepared formulation was further processed via standard methods to provide suitable layers for use in the tire builds. The assembled tire was cured under standard curing conditions. Prior to curing of the tire, the green tack of the tie layer with respect to the DVA innerliner was determined via a pull test using an Instron (per ISO 527). After tire cure, cured adhesion of the tie layer with respect to the DVA innerliner, likewise, was determined via a pull test using an Instron (per ISO 527). Three samples were tested for each rubber formulation.

**Table II: Test Results**

| Testing/Property | Units | Table I | A | B | C | D |
|---|---|---|---|---|---|---|
| | | formulation | | | | |
| Green Tack | Avg. | 9.6 | 5.1 | 7.1 | 7.4 | 7.4 |
| (Tack Positive | Force | | | | | |
| Pressure) | (N) | | | | | |
| Cured Adhesion | Avg. | 232 | 128 | 154 | 154 | 136 |
| (Instron Tear with | Force | | | | | |
| Backing) | (N) | | | | | |

Based upon the test results, it is clear that the green tack and cured adhesion for the rubber formulation of the tie layer of Table I surpassed that of all of the comparative examples.

## Claims

1. A tire comprising an outer tread (14), a barrier layer (24) disposed radially inwardly of the outer tread (14) and including a dynamically vulcanized alloy, the dynamically vulcanized alloy including a resin as a continuous phase and at least a partially vulcanized rubber as a dispersed phase, a tire layer (18) situated between the barrier layer (24) and the tread (14) and including a rubber formulation comprising a diene rubber, and a tie layer (22) situated between and adjacent to the barrier layer (24) and the tire layer (18), the tie layer (22) including a rubber formulation comprising 100 parts of a mixture of rubbers chosen from 10-50 parts nitrile rubber, 20-70 parts natural rubber, and 10-30 parts synthetic polyisoprene rubber, wherein the mixture is the total amount of rubber for the rubber formulation, at least one reinforcing filler, at least one tackifier; and optionally at least one processing oil, wherein the tie layer (22) is adhered directly to the barrier layer (24) and the tire layer (18).

2. The tire of claim 1 wherein the barrier layer (24) is the innermost layer.

3. The tire of claim 1 or 2 wherein the tire layer (18) is a ply layer.

4. The tire of at least one of the previous claims wherein the tackifier comprises a gum rosin, a condensation product of alkyl phenol and acetylene, or mixtures thereof.

5. The tire of at least one of the previous claims wherein the tire comprises the processing oil, the processing oil comprising a paraffinic and/or naphthenic petroleum oil.

6. The tire of at least one of the previous claims wherein the resin is a polyamide.

7. The tire of at least one of the previous claims wherein the at least partially vulcanized rubber is a halogenated rubber.

8. A tie layer for use in a tire, the tie layer (22) comprising a rubber formulation comprising 100 parts of a mixture of rubbers chosen from 10-50 parts nitrile rubber, 20-70 parts natural rubber, and 10-30 parts synthetic polyisoprene rubber, wherein the mixture is the total amount of rubber for the rubber formulation, at least one reinforcing filler, at least one tackifier; and optionally at least one processing oil.

9. The tie layer of claim 8 wherein the tackifier comprises a gum rosin, a condensation product of alkyl phenol and acetylene, or mixtures thereof.

10. The tie layer of claim 8 or 9 wherein the rubber formulation includes the processing oil and the processing oil comprising a paraffinic and/or naphthenic petroleum oil.

11. A method of manufacturing a tire, the method comprising:
positioning a barrier layer (24) including a dynamically vulcanized alloy on a tire building apparatus, the dynamically vulcanized alloy including a resin as a continuous phase and at least a partially vulcanized rubber as a dispersed phase,
positioning a tie layer (22) directly on the barrier layer (24), the tie layer (22) including a rubber formulation comprising 100 parts of a mixture of rubbers chosen from 10-50 parts nitrile rubber, 20-70 parts natural rubber, and 10-30 parts synthetic polyisoprene rubber, wherein the mixture is the total amount of rubber for the rubber formulation, at least one reinforcing filler, at least one tackifier and optionally at least one processing oil,
positioning a tire layer (18) directly on the tie layer (22), the tire layer (18) including a rubber formulation comprising a diene rubber; and
disposing radially outwardly of the tire layer (18) a tread (14) to define an uncured tire assembly.

12. The method of claim 11 further comprising curing the uncured tire assembly under conditions of heat and pressure to directly adhere the tie layer (22) to the barrier layer (24) and the tire layer (18).

13. The method of claim 11 or 12 wherein the barrier layer (24) is the innermost layer.

14. The method of claims 11, 12 or 13 wherein the tire layer (18) is a ply layer.

## Patentansprüche

1. Reifen, umfassend eine äußere Lauffläche (14), eine Barriereschicht (24), die radial einwärts von der äußeren Lauffläche (14) angeordnet ist und eine dynamisch vulkanisierte Legierung beinhaltet, wobei die dynamisch vulkanisierte Legierung ein Harz als kontinuierliche Phase und mindestens einen teilvulkanisierten Kautschuk als dispergierte Phase beinhaltet, eine Reifenschicht (18), die sich zwischen der Barriereschicht (24) und der Lauffläche (14) befindet und eine Kautschukrezeptur beinhaltet, die einen Dienkautschuk umfasst, und eine Haftvermittlerschicht (22), die sich zwischen und benachbart zu der Barriereschicht (24) und der Reifenschicht (18) befindet, wobei die Haftvermittlerschicht (22) eine Kautschukrezeptur beinhaltet, umfassend 100 Teile einer Mischung von Kautschuken, ausgewählt aus 10-50 Teilen Nitrilkautschuk, 20-70 Teilen Naturkautschuk und 10-30 Teilen synthetischem Polyisoprenkautschuk, wobei die Mischung die Gesamtmenge an Kautschuk für die Kautschukrezeptur ist, mindestens einen Verstärkungsfüllstoff, mindestens einen Klebrigmacher, und optional mindestens ein Prozessöl, wobei die Haftvermittlerschicht (22) direkt an die Barriereschicht (24) und die Reifenschicht (18) angeheftet ist.

2. Reifen nach Anspruch 1, wobei die Barriereschicht (24) die innerste Schicht ist.

3. Reifen nach Anspruch 1 oder 2, wobei die Reifenschicht (18) eine Karkassenlagenschicht ist.

4. Reifen nach mindestens einem der vorgenannten Ansprüche, wobei der Klebrigmacher ein Balsamharz, ein Kondensationsprodukt von Alkylphenol und Acetylen, oder Mischungen davon ist.

5. Reifen nach mindestens einem der vorgenannten Ansprüche, wobei der Reifen das Prozessöl umfasst, wobei das Prozessöl ein paraffinisches und/oder naphthenisches Mineralöl umfasst.

6. Reifen nach mindestens einem der vorgenannten Ansprüche, wobei das Harz ein Polyamid ist.

7. Reifen nach mindestens einem der vorgenannten Ansprüche, wobei der mindestens teilvulkanisierte Kautschuk ein halogenierter Kautschuk ist.

8. Haftvermittlerschicht zur Verwendung in einem Reifen, wobei die Haftvermittlerschicht (22) eine Kautschukrezeptur umfasst, umfassend 100 Teile einer Mischung von Kautschuken, ausgewählt aus 10-50 Teilen Nitrilkautschuk, 20-70 Teilen Naturkautschuk und 10-30 Teilen synthetischem Polyisoprenkautschuk, wobei die Mischung die Gesamtmenge an Kautschuk für die Kautschukrezeptur ist, mindestens einen Verstärkungsfüllstoff, mindestens einen Klebrigmacher, und optional mindestens ein Prozessöl.

9. Haftvermittlerschicht nach Anspruch 8, wobei der Haftvermittler ein Balsamharz, ein Kondensationsprodukt von Alkylphenol und Acetylen, oder Mischungen davon umfasst.

10. Haftvermittlerschicht nach Anspruch 8 oder 9, wobei die Kautschukrezeptur das Prozessöl beinhaltet und das Prozessöl ein paraffinisches und/oder naphthenisches Mineralöl umfasst.

11. Verfahren zur Herstellung eines Reifens, wobei das Verfahren umfasst:
Positionieren einer Barriereschicht (24), die eine dynamisch vulkanisierte Legierung beinhaltet, auf einer Reifenaufbauvorrichtung, wobei die dynamisch vulkanisierte Legierung ein Harz als kontinuierliche Phase und mindestens einen teilvulkanisierten Kautschuk als dispergierte Phase beinhaltet,
Positionieren einer Haftvermittlerschicht (22) direkt auf der Barriereschicht (24), wobei die Haftvermittlerschicht (22) eine Kautschukrezeptur beinhaltet, umfassend 100 Teile einer Mischung von Kautschuken, ausgewählt aus 10-50 Teilen Nitrilkautschuk, 20-70 Teilen Naturkautschuk und 10-30 Teilen synthetischem Polyisoprenkautschuk, wobei die Mischung die Gesamtmenge an Kautschuk für die Kautschukrezeptur ist, mindestens einen Verstärkungsfüllstoff, mindestens einen Klebrigmacher und optional mindestens ein Prozessöl,
Positionieren einer Reifenschicht (18) direkt auf der Haftvermittlerschicht (22), wobei die Reifenschicht (18) eine Kautschukrezeptur beinhaltet, die einen Dienkautschuk umfasst; und
Anordnen einer Lauffläche (14) radial auswärts von der Reifenschicht (18), um eine unvulkanisierte Reifenanordnung zu definieren.

12. Verfahren nach Anspruch 11, weiter das Vulkanisieren der unvulkanisierten Reifenanordnung unter Wärme- und Druckbedingungen umfassend, um die Haftvermittlerschicht (22) direkt an die Barriereschicht (24) und die Reifenschicht (18) anzuheften.

13. Verfahren nach Anspruch 11 oder 12, wobei die Barriereschicht (24) die innerste Schicht ist.

14. Verfahren nach Ansprüchen 11, 12 oder 13, wobei die Reifenschicht (18) eine Karkassenlagenschicht ist.

## Revendications

1. Bandage pneumatique comprenant une bande de roulement externe (14), une couche (24) faisant office de barrière disposée à l'intérieur de la bande de roulement externe (14) en direction radiale et englobant un alliage soumis à une vulcanisation dynamique, l'alliage soumis à une vulcanisation dynamique englobant une résine à titre de phase continue et au moins un caoutchouc partiellement vulcanisé à titre de phase dispersée, une couche de bandage pneumatique (18) située entre la couche (24) faisant office de barrière et la bande de roulement (14) et englobant une formulation de caoutchouc comprenant un caoutchouc diénique, et une couche de liaison (22) située entre la couche (24) faisant office de barrière et la couche de bandage pneumatique (18), et en position adjacente auxdites couches, la couche de liaison (22) englobant une formulation de caoutchouc comprenant 100 parties d'un mélange de caoutchoucs choisis parmi 10 à 50 parties de caoutchouc nitrile, 20 à 70 parties de caoutchouc naturel et 10 à 30 parties de caoutchouc de polyisoprène synthétique, le mélange représentant la quantité totale de caoutchouc pour la formulation de caoutchouc, au moins une matière de charge faisant office de renforcement, au moins un agent rendant collant, et de manière facultative au moins une huile plastifiante, la couche de liaison (22) adhérant directement à la couche (24) faisant office de barrière et à la couche de bandage pneumatique (18).

2. Bandage pneumatique selon la revendication 1, dans lequel la couche (24) faisant office de barrière représente la couche située le plus à l'intérieur.

3. Bandage pneumatique selon la revendication 1 ou 2, dans lequel la couche de bandage pneumatique (18) est une couche de nappe.

4. Bandage pneumatique selon au moins une des revendications précédentes, dans lequel l'agent rendant collant comprend une colophane, un produit de condensation d'alkylphénol et d'acétylène ou leurs mélanges,

5. Bandage pneumatique selon au moins une des revendications précédentes, dans lequel le bandage pneumatique comprend une huile plastifiante, l'huile plastifiante comprenant une huile de pétrole paraffinique et/ou naphténique.

6. Bandage pneumatique selon au moins une des revendications précédentes, dans lequel la résine est un polyamide.

7. Bandage pneumatique selon au moins une des revendications précédentes, dans lequel le caoutchouc au moins partiellement vulcanisé est un caoutchouc halogéné.

8. Couche de liaison pour son utilisation dans un bandage pneumatique, la couche de liaison (22) comprenant une formulation comprenant 100 parties d'un mélange de caoutchoucs choisis parmi 10 à 50 parties de caoutchouc nitrile, 20 à 70 parties de caoutchouc naturel et 10 à 30 parties de caoutchouc de polyisoprène synthétique, le mélange représentant la quantité totale de caoutchouc pour la formulation de caoutchouc, au moins une matière de charge faisant office de renforcement, au moins un agent rendant collant, et de manière facultative au moins une huile plastifiante.

9. Couche de liaison selon la revendication 8, dans laquelle l'agent rendant collant comprend une colophane, un produit de condensation d'alkylphénol et d'acétylène ou leurs mélanges,

10. Couche de liaison selon la revendication 8 ou 9, dans laquelle la formulation de caoutchouc englobe l'huile plastifiante et l'huile plastifiante comprenant une huile de pétrole paraffinique et/ou naphténique.

11. Procédé de confection de bandage pneumatique, le procédé comprenant le fait de :
disposer une couche (24) faisant office de barrière englobant un alliage soumis à une vulcanisation dynamique, sur un appareil de confection de bandage pneumatique, l'alliage soumis à une vulcanisation dynamique englobant une résine à titre de phase continue et au moins un caoutchouc partiellement vulcanisé à titre de phase dispersée ;
disposer une couche de liaison (22) directement sur la couche (24) faisant office de barrière, la couche de liaison (22) comprenant une formulation comprenant 100 parties d'un mélange de caoutchoucs choisis parmi 10 à 50 parties de caoutchouc nitrile, 20 à 70 parties de caoutchouc naturel et 10 à 30 parties de caoutchouc de polyisoprène synthétique, le mélange représentant la quantité totale de caoutchouc pour la formulation de caoutchouc, au moins une matière de charge faisant office de renforcement, au moins un agent rendant collant, et de manière facultative au moins une huile plastifiante ;
disposer une couche de bandage pneumatique (18) directement sur la couche de liaison (22), la couche de bandage pneumatique (18) englobant une formulation de caoutchouc comprenant un caoutchouc diénique ; et
disposer à l'extérieur de la couche de bandage pneumatique (18), en direction radiale, une bande de roulement (14) pour définir un assemblage de bandage pneumatique non vulcanisé.

12. Procédé selon la revendication 11, comprenant en outre la vulcanisation de l'assemblage de bandage pneumatique non vulcanisé dans des conditions de chaleur et de pression pour obtenir une adhérence directe de la couche de liaison (22) à la couche (24) faisant office de barrière et à la couche de bandage pneumatique (18).

13. Procédé selon la revendication 11 ou 12, dans lequel la couche (24) faisant office de barrière représente la couche située le plus à l'intérieur.

14. Procédé selon la revendication 11, 12 ou 13 dans lequel la couche de bandage pneumatique (18) est une couche de nappe.
